**Europäisches Patentamt**

**European Patent Office**

**Office européen des brevets**

(19)

(11) Veröffentlichungsnummer : **0 466 962 B1**

(12) **EUROPÄISCHE PATENTSCHRIFT**

(45) Veröffentlichungstag der Patentschrift :
**12.01.94 Patentblatt 94/02**

(51) Int. Cl.⁵ : **C04B 35/52**

(21) Anmeldenummer : **90113890.9**

(22) Anmeldetag : **20.07.90**

(54) **Verfahren zur Herstellung eines mit Kohlenstoffasern verstärkten Kohlenstoffverbundskörpers.**

(43) Veröffentlichungstag der Anmeldung :
**22.01.92 Patentblatt 92/04**

(45) Bekanntmachung des Hinweises auf die
Patenterteilung :
**12.01.94 Patentblatt 94/02**

(84) Benannte Vertragsstaaten :
**BE CH DE FR GB IT LI NL**

(56) Entgegenhaltungen :
**EP-A- 0 237 031**
**EP-A- 0 307 968**
**CHEMICAL ABSTRACTS, Band 88, Nr. 26, 26.**
**Juni 1978, Zusammenfassung Nr. 196333v, Co-**
**lumbus, Ohio, US; & JP-A-51 039 251 (SHOWA)**
**27-10-1976**

(73) Patentinhaber : **SIGRI GREAT LAKES**
**CARBON GmbH**
**Rheingaustrasse 182**
**D-65203 Wiesbaden (DE)**

(72) Erfinder : **Jäger, Hubert, Dr. Dipl.-Chem.**
**Biberbacher Strasse 19**
**D-8901 Biberbach-Eisenbrechtshofen (DE)**
Erfinder : **Gruber, Udo, Dipl.-Ing. (FH)**
**von Rehlingenstrasse 48 a**
**D-8902 Neusäss (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung eines Verbundkörpers, der aus zwei- oder dreidimensionalen textilen Gebilden aus Kohlenstoffasern und aus einer Kohlenstoffmatrix aus einer carbonisierten Kunstharz-Pechmischung besteht.

Verbundkörper aus mit Kohlenstoffasern verstärktem Kohlenstoff, im folgenden auch CFC-Körper genannt, haben eine Kohlenstoffmatrix, in die zur Verstärkung Kohlenstoffasern oder daraus hergestellte textile Gebilde eingebunden sind. Derartige Körper zeichnen sich durch hohe Festigkeit und Steifigkeit bei geringem Gewicht aus. Besonders bemerkenswert ist, daß diese Eigenschaften bis zu hohen Temperaturen mindestens konstant sind. CFC-Körper haben bei einer hohen Wärmeleitfähigkeit eine niedrige Wärmeausdehnung und damit eine ausgezeichnete Temperaturwechselfestigkeit. Weitere gute Eigenschaften sind ihre, mit Ausnahme der Verwendung von Kurzfasern, hohe Bruchzähigkeit und ihre geringe Neigung zu ermüden oder zu kriechen. Wenn das textile Gerüst, wie dies bei Filzen, Gestricken oder einem Haufwerk aus Stapelfasern sein kann, nur zu einem Teil mit der Matrix ausgefüllt ist, werden Verbundwerkstoffe mit gutem Wärmeisolationsvermögen erhalten. Diese Paarung von Eigenschaften, verbunden mit dem außergewöhnlich hohen Schmelzpunkt des Kohlenstoffs machen Werkstoffe dieser Art geeignet für extreme Anwendungen, wie sie in der Hochtemperaturtechnik sowie der Raum- und Luftfahrt häufig sind. Kohlenstofffasern, unter denen in dieser Schrift sowohl carbonisierte wie auch graphitierte Fasern verstanden werden sollen, werden entweder aus Cellulose, Polyacrylnitril oder aus einem speziell aufbereiteten Pech hergestellt. Als Ausgangsstoffe für die Matrix werden heute im wesentlichen drei Gruppen von Stoffen verwendet, die je nach Anwendungsfall eingesetzt werden: Härtbare Harze, thermoplastische Peche und Kohlenwasserstoffe wie Methan, Propan, Acetylen oder Benzol. Bei Verwendung von Harzen oder Pechen wird das Fasergebilde mit dem jeweiligen Matrixvorprodukt in flüssiger Form imprägniert oder gefüllt, das Harz gegebenenfalls ausgehärtet und der entstandene Körper danach carbonisiert. Die niederen Kohlenwasserstoffe werden direkt nach dem Chemical Vapor Deposition-Verfahren (CVD-Prozess) bei hohen Temperaturen aus der Gasphase als Matrixkohlenstoff auf den Fasern abgeschieden. Durch gezielte Auswahl und Kombination von Fasersorte, Art und Aufbau des verstärkenden Fasergebildes, des Matrixvorproduktes und des Herstellungsverfahrens, bis zum Verkoken oder Graphitieren, läßt sich eine große Zahl maßgeschneiderter Verbundwerkstoffe herstellen.

Bindepech-Kunstharz-Mischungen sind aus der DE-AS 1 131 882 bekannt. Für die Herstellung von Formkörpern durch Verformen eines Gemisches aus festen elementaren Kohlenstoff enthaltenden Teilchen und einem Harz und Aushärtung der Gegenstände durch Wärme oder gegebenenfalls Verkokung wird dort vorgeschlagen, als Harz ein Produkt zu nehmen, das durch Umsetzung von Teer oder Pech in Gegenwart eines sauren Katalysators mit einer den Furfural- oder bzw. und Furfurylrest enthaltenden organischen Verbindung erhalten worden ist. Als Beispiele für derartige organische Verbindungen werden Furfurol oder Furfurylalkohol genannt. Diese Veröffentlichung betrifft die Herstellung von hoch füllerhaltigen Stäben, Elektroden, Blöcken oder Rohren aus Koksteilchen mit einem Binder und nicht einen Verbundwerkstoff aus verstärkenden Faserwerkstoffen und einer Matrix. Für die Herstellung des Harzbinders werden gleichermaßen Teere, die einen sehr niedrigen Erweichungspunkt haben, oder Peche verwendet und es wird keine weitere Spezifikation für diese Stoffe angegeben. Ein Fachmann muß infolgedessen davon ausgehen, daß hier die branchenüblichen Bindemittel auf Teer- bzw. Pechbasis und nicht die erst in den letzten Jahren entwickelten Spezialpeche mit Erweichungspunkten von weit über 150 °C, die als schmelzflüssige Bindepeche nicht geeignet sind, in Frage kommen. Als Komponente zum Verharzen wird zudem monomeres Furfural oder monomerer Furfurylalkohol und nicht ein Polymeres aus der Gruppe der Phenolharze verwendet.

Eine Mischung aus Teer und 1 - 5 % Phenolkondensationsharzen, gegebenenfalls unter Zusatz von Pech für eine Verwendung als Straßenbelag ist als ferner Stand der Technik in der DE-PS 526 783 beschrieben.

US-PS 4,431,503 lehrt ein Verfahren zur Herstellung von gebrannten, Kohlenstoff enthaltenden Elektroden für die schmelzelektrolytische Herstellung von Metallen unter Verwendung eines härtbaren Harzes als Binder. Zweck dieser Lehre ist es, bei Erhalt des Datenniveaus konventionell hergesteller Elektroden durch das neue Herstellungsverfahren Energie und Produktionszeit zu sparen.

Der Harzbinder kann auch in Mischung mit einem konventionellen Pech- oder Teerbinder verwendet werden. Die Binderkomponenten sind auch hier bis auf die allgemeine Angabe, daß die Harze bei Raum- oder Mischungstemperatur eine niedrige Viskosität haben sollen, nicht näher spezifiziert. Konventionelle Binderpeche haben Erweichchungspunkte von 90 bis 120 °C und Koksausbeuten von 55 bis 60 % (Ullmanns Encyclopedia of Industrial Chemistry, VCH Verlagsgesellschaft Weinheim 1986, Vol. A 5, p. 106). Sie unterscheiden sich darin und bezüglich Zusammensetzung und Verarbeitungseigenschaften eindeutig von Spezialpechen. Die herzustellenden Produkte sind übliche, aus körnigem Füller und dem Binderbestandteil bestehende Elektroden. Diese Patentschrift legt nicht nahe, für die Herstellung kohlenstoffaserverstärkter Kohlenstoffverbundkörper ein System aus einem speziellen Phenolharz und einem Spezialpech, das als flüssiges Bindepech nicht geeignet ist und ein spezielles Fertigungsverfahren zu verwenden.

Ein Kohlenstoffkörper aus ein- oder mehrlagigem Kohlenstoff- oder Graphitfilz, der mit einem kohlenstoffhaltigen Bindemittel imprägniert worden ist und der durch Einwirkung von Wärme und Druck verkokt und gegebenenfalls graphitiert worden ist, wird in der EP-A-0 237 031 beschrieben. Zur Herstellung des Kohlenstoffkörpers dient ein Verfahren, bei dem streifenförmig zugeschnittene und mit einem kohlenstoffhaltigen Bindemittel imprägnierte Kohlenstoff- oder Graphitfilzbahnen in mehreren Lagen einander überlappend auf einen Kern gewickelt werden und der so erhaltene Wickelkörper anschließend zur Kondensation und Verkokung der Binderkomponente entsprechenden Temperaturbehandlungsschritten unterworfen wird. Beim Kondensations- und Verkokungsschritt verkleben die über- und nebeneinanderliegenden Filzstreifen miteinander. Als kohlenstoffhaltiges Bindemittel wird ein Phenolformaldehydharz oder dessen Lösung angegeben. Die Verwendung von Kunstharz-Pechmischungen als Bindemittel ist in dieser Literaturstelle nicht erwähnt oder angedeutet.

Ein Verfahren zur kostengünstigen Herstellung eines kohlenstoffaserverstärkten Kohlenstoffwerkstoffes mit besonders guter Haftung zwischen den verstärkenden Fasern und der Kohlenstoffmatrix und damit mit verbesserten Festigkeitseigenschaften wird in der EP-A-0 307 968 beschrieben. Danach wird die Oberfläche der verstärkenden Kohlenstoffasern zunächst mit einer Dispersion von feinem Kohlenstoff- oder Graphitpulver oder von Kohlenstoffkurzfasern von Längen unter 2 mm in einem Kunstharz oder einer Kunstharzlösung überzogen und es werden die dispergierten Feststoffteilchen durch Aushärten der Kunstharzkomponente auf den Oberflächen der Kohlenstofffasern fixiert. Danach wird das so vorbereitete Fasergebilde mit einem oder mehreren verkokbaren, flüssigen Matrixvorprodukten aus der Gruppe härtbare Harze und Pech imprägniert und der imprägnierte Körper carbonisiert und gegebenenfalls graphitiert. Dieses Verfahren ist trotz der verfahrensbedingten Verbesserung der Bindung zwischen den Kohlenstofffasern und der Matrix wegen des Schrittes der Aufbringung der die Haftung verbessernden Zwischenschicht noch relativ aufwendig. Es wird auch keine spezielle Mischung aus einem Phenolharz und einem speziellen Pechpulver als Matrixvorprodukt verwendet.

Durch die US-PS 4,772,502 wird ein speziell ausgerüstetes Garn für die Herstellung von CFC-Verbundwerkstoffen offenbart. In einem Trockenverfahren wird eine Mischung aus feinem Pech und einem fein aufgemahlenen Koks in die Zwischenräume der Fasern des Garns eingebracht und das Garn mit einer Hülle aus Plastik umgeben, um die Einlagerungen zu fixieren und das Garn besser verarbeiten zu können. Die Pulvermischung kann auch Metalle, anorganische Verbindungen und härtbare Harze, wie auch Phenolharze in Pulverform in Mengen bis zu 50 % enthalten. Das so ausgerüstete Garn wird mit textilen Verfahren in eine gewünschte Form gebracht und dann unter Wärmeeinwirkung in einen Kohlenstoff-Kohlenstoff-Verbundwerkstoff übergeführt. Dieses Verfahren stellt eine völlig neue Variante für die Herstellung von CFC-Werkstoffen dar und ist mit dem Gegenstand dieser Patentanmeldung nicht vergleichbar. Das Vorprodukt für die spätere Ausbildung der Matrix ist ein Gemisch aus pulverförmigem Pech und Koks, dem wahlweise eine gewisse Menge eines härtbaren Harzes in Pulverform zugemischt werden kann. In der vorliegenden Patentanmeldung werden völlig andere Wege beschritten.

Die bisher in der Praxis angewandten Verfahren zur Herstellung von CFC-Verbundkörpern sind vergleichsweise aufwendig. Um einen dichten Körper mit hoher Festigkeit zu erhalten, ist es erforderlich, den gehärteten und carbonisierten Körper, der infolge des Ausgasens von Crackprodukten des Matrixharzes noch porös ist, so oft nachzuimprägnieren und wieder zu verkoken, bis das gewünschte Datenniveau erreicht ist. Hierzu sind häufig bis zu vier Nachverdichtungsschritte erforderlich (Internat. Encyclopedia of Composites, VCH Publishers New York 1990, Vol. 1, p. 176). Dieses Verfahren erfordert viel Zeit und ist mit hohem Aufwand verbunden. Nach dem Verfahren gemäß der US-PS 4,772,502 soll die Anzahl der Nachverdichtungsschritte reduziert werden können. Als schwerwiegender Nachteil muß aber dafür hingenommen werden, daß als Vorprodukt für die Herstellung des Verbundkörpergerüsts ein spezielles, mit Pulvereinlagerungen versehenes Fasergebilde mit einer Kunststoffumhüllung nach einem komplizierten Verfahren hergestellt werden muß.

Es ist infolgedessen Aufgabe dieser Erfindung, ein Verfahren zur Herstellung eines mit Kohlenstoffasern verstärkten Verbundkörpers mit einer Kohlenstoffmatrix anzugeben, bei dem mit einer geringeren Anzahl von Verfahrensschritten als bei den bisher gebräuchlichen vielstufigen Verfahren kohlenstoffaserverstärkte Kohlenstoffverbundkörper mit mindestens gleichen physikalischen Kennwerten wie mit den bekannten vielstufigen Verfahren erhalten werden.

Nach dem kennzeichnenden Teil des Patentanspruchs 1 wird die Aufgabe dadurch gelöst, daß

a) durch Vermischen eines Phenolharzes vom Resoltyp mit einem Koksrückstand von 40 bis 65 %

- mit einem Pech aus der Gruppe Steinkohlenteer-, Petrol- oder Mesophasenpech, Erweichungspunkt größer als 200 °C, Koksrückstand größer als 75 %, Kornfeinheit 100 % kleiner 200 μm
- in einem Verhältnis von 100 Gewichtsteilen Harz und 60 bis 200 Gewichtsteilen Pech
- bei einer Temperatur von 60 bis 90 °C
- eine Matrixharzmischung hergestellt wird,

b) ein aus Kohlenstoffasern bestehendes textiles Gebilde mit der Matrixharzmischung bei einer Temperatur von Raumtemperatur bis 110 °C infiltriert wird,

c) das infiltrierte textile Gebilde als solches oder als Stapel aus einer Anzahl derartiger übereinandergeschichteter Gebilde in einer heizbaren Preßeinrichtung bei einer Temperatur von minimal 130 °C und maximal 180 °C und einem Druck von mindestens 0,2 und höchstens 5,0 MPa ausgehärtet wird,

d) der ausgehärtete Körper unter Ausschluß von Sauerstoff mit einem Temperaturgradienten von mindestens 9 K pro Stunde bis zu einer Temperatur von mindestens 600 °C carbonisiert wird.

Das für die Kunstharz-Pechmischung verwendete Resol kann einen Wassergehalt von bis zu 18 Gewichtsprozent haben und hat vorteilhafterweise bei Raumtemperatur eine Viskosität im Bereich von 500 bis 3000 m Pa·s.

Die Pechkomponente ist ein Spezialpech aus der Gruppe Steinkohlenteer-, Petrol- oder Mesophasenpech mit einem Erweichungspunkt größer als 200 °C und einem Koksrückstand größer als 75 %. Vor der Zugabe zum Harz muß es eine Kornfeinheit von 100 % < 200 μm, vorteilhafterweise von 100 % < 100 μm haben. Die Zerkleinerung kann mit jedem Mahlaggregat geschehen, das für die Zerkleinerung von spröden Materialien geeignet ist. Zweckmäßig ist ein zweistufiger Prozeß, bei dem zuerst vorzerkleinert und dann auf einer Feinprallmühle feingemahlen wird.

Das Einmischen des Pechpulvers kann bei Raumtemperatur oder bei Temperaturen bis zu 110 °C erfolgen, wobei sich die Wahl der Mischungstemperaturen nach den vorhandenen verfahrenstechnischen Gegebenheiten richtet. Zum Einmischen von Pechmengen, die einem Gehalt von 80 bis 100 Gewichtsteilen Pech in 100 Gewichtsteilen Harz entsprechen, ist eine höhere Mischungstemperatur vorteilhaft.

Als verstärkende Komponenten erfindungsgemäßer Verbundwerkstoffe eignen sich zwei- und dreidimensionale textile Gebilde aus Kohlenstoff, wie Rovings, Gelege, Gewebe, Gestricke, Filze und Stapelfasern. Die Ausgangsstoffe für die Herstellung dieser textilen Gebilde können Zellulose, Polyacrylnitril oder auch Pech sein. Bei Verwendung von Stapel- oder Kohlenstoffkurzfasern als verstärkender Komponente haben die zu infiltrierenden Fasergebilde bevorzugt einen Faservolumengehalt von mindestens 15 und höchstens 70% und die Fasern eine Faserlänge von mindesters drei Millimetern. Den Verarbeitungseigenschaften der textilen Gebilde entsprechend, wird das Matrixvorprodukt in an sich bekannter Weise durch Tränken, Imprägnieren mit oder ohne Vakuum und Druck, Einstreichen, Aufbringen mit einer Auftragsrolle oder mittels einer Prepregmaschine auf- bzw. eingebracht. Die Temperatur liegt bei diesem Verfahrensschritt zwischen Raumtemperatur und 110 °C.

Die Menge des einzubringenden Matrixvorprodukts richtet sich nach dem späteren Verwendungszweck des CFC-Körpers. In den meisten Fällen werden weitgehend dichte Körper produziert, für deren Vorprodukt eine möglichst vollständige Ausfüllung aller Zwischenräume zwischen den Fasern der jeweiligen textilen Gebilde angestrebt wird. Anders ist die Sachlage bei der Herstellung von CFC-Teilen für Isolationszwecke, für Filtermaterialien oder als Katalysatorträger. Hier ist nur eine Teilerfüllung der Zwischenräume zwischen den Fasern, bzw. Filamenten der gewählten textilen Gebilde erwünscht. Für diese Anwendungen werden bevorzugt Filze und Stapelfasern verwendet. Die genannten Anwendungen sind jedoch nicht auf Filze und Stapelfasern beschränkt. Eine derartige Teilerfüllung wird z.B. erreicht, wenn man das Matrixvorprodukt nach dem Imprägnieren aus dem textilen Gebilde ablaufen läßt oder es bis zu einem gewünschten Grade abpreßt und dann das textile Gebilde wieder aufatmen läßt. Durch Einstellung bestimmter, der gestellten Aufgabe angepaßter Viskositäten kann bei dieser Verfahrensweise der Füllungsgrad weiter variiert werden.

Die mit dem Matrixvorprodukt beschichteten, imprägnierten oder gefüllten textilen Gebilde werden sodann entweder einlagig belassen oder übereinandergelegt, so daß Schichtpakete entstehen. Beim Übereinanderlegen können die einzelnen Schichten relativ zueinander in verschiedenen Orientierungen mit Winkeln zwischen 0 und 90° positioniert werden. Die Lagen innerhalb der Schichtpakete sind dabei bezüglich textiler Orientierungsmerkmale, wie z.B. der Faserorientierung, Kette oder Schuß abgelegt, wobei die Orientierung über alle Lagen gleichsinnig, von Lage zu Lage unterschiedlich oder nach einem anderen Plan im Hinblick auf die spätere Belastung des Bauteils gewählt sein kann. Das Laminieren der Schichten ist so vorzunehmen, daß sich keine Lufteinschlüsse, die die Eigenschaften des Verbundkörpers beeinträchtigen würden, bilden.

Nach dem Infiltrieren, bzw. Infiltrieren und Laminieren werden die einzelnen, die entsprechende Menge Matrixvorprodukt enthaltenden Schichten oder Schichtstapel in eine heizbare Preßeinrichtung überführt und dort bei einer Temperatur von mindestens 130 °C und höchstens 180°C und einer Auflast von mindestens 0,2 und höchstens 5 MPa ausgehärtet. Die Härtungszeit beträgt je nach Menge des Gehalts an Matrixvorprodukt im Werkstück und Größe des Werkstücks 2 bis 3 Stunden. In der Aufheizungsphase der Härtung wird mit einem Temperaturgradienten von ca. 2 K/Min., beim eigentlichen Härten mit 0,8 bis 0,3 K/Min. gearbeitet. Das Verdichten und Härten kann in heizbaren Gesenkpressen, Etagenpressen oder in Autoklaven, beispielsweise nach der Vakuumsacktechnik durchgeführt werden.

Nach dem Entformen werden die Werkstücke mit einem Temperaturgradienten von mindestens 9 K/Stunde in einer Inertgasatmosphäre bis zu einer Temperatur von mindestens 600°C verkokt. Dabei werden bereits ohne zusätzliche Druckeinwirkung hinreichend gute physikalische Kennwerte erreicht. Eine Verkokung unter Druck vermag diese Ergebnisse noch zu verbessern.

Die so erhaltenen CFC-Körper haben noch eine gewisse Porosität, die vom Entgasungsverlust während der Verkokung herrührt. Zur zusätzlichen Verdichtung und damit Verbesserung des Datenniveaus der Körper kann in einem weiteren Verfahrensschritt mit einem flüssigen Kohlenstoffträger imprägniert werden. Dies geschieht mit den üblichen Vakuum-Druck-Verfahren. Die angewendeten Temperaturen richten sich nach dem verwendeten Imprägniermittel. Sie liegen zwischen Raumtemperatur und 350 °C. Bei sehr hohen Temperaturen muß dabei unter Inertgas gearbeitet werden. Als Imprägniermittel sind Imprägnierpeche mit Erweichungspunkten von 50 bis 250°C (nach DIN 52025) und Kunstharze, wie Phenolharze mit einem Koksrückstand von 40 bis 65 % (nach DIN 51905) oder Furanharze geeignet. Vorteilhaft ist auch die Imprägnierung mit einer geschmolzenen Mischung aus einem Imprägnierpech und einem Phenolharz, dessen Koksrückstand 40 bis 65 % beträgt, im Gewichtsverhältnis 1:2. Die Wahl des Imprägniermittels richtet sich nach den gewünschten Eigenschaften des fertigen Werkstoffes.

Nach dem Imprägnieren wird abermals in im Prinzip gleicher Weise wie im vorstehenden bereits beschrieben wurde, carbonisiert.

Nach diesem Herstellungsprozeß liegt, unabhängig davon, ob nachverdichtet wurde oder nicht, ein Körper mit einer koksartigen Matrix und den diesem Aufbau entsprechenden Eigenschaften vor. Für Anwendungen, bei denen z.B. eine gute kristalline Ordnung, eine hohe wärme- oder elektrische Leitfähigkeit oder eine gute Temperaturwechselbeständigkeit verlangt wird, müssen die Werkstücke noch graphitiert werden. Dies geschieht in an sich bekannten Spezialöfen durch Erhitzen der Körper bis zu Temperaturen von mindestens 1800 °C, vorzugsweise 2000 bis 2500°C.

Nach dem erfindungsgemäßen Verfahren hergestellte CFC-Körper haben im Fertigungszustand carbonisiert, nachimprägniert und nochmals carbonisiert das gleiche Niveau an physikalischen Daten wie entsprechende Körper, die nach der bisher gebräuchlichen Methode unter Verwendung eines Matrixvorprodukts aus Kunstharz ohne Spezialpechzusatz produziert und im carbonisierten Zustand noch drei mal mit einem der im vorstehenden beschriebenen Imprägniermittel durch Imprägnieren und Carbonisieren nachverdichtet worden waren. Durch das neue Verfahren werden demgemäß unter Einsparung von zwei Imprägnierungen und zwei Carbonisierungsschritten CFC-Körper gleicher Güte und Leistungsfähigkeit erhalten, wie nach dem bisher gebräuchlichen Verfahren. Entsprechend werden die Fertigungszeiten auf ein Drittel des früheren Wertes und der Kostenaufwand in äquivalentem Maße gesenkt. Außerdem werden nach dem erfindungsgemäßen Verfahren bereits ohne eine Nachverdichtung, d.h. im gehärteten und carbonisierten Zustand harte, verschleißfeste, für einen technischen Einsatz geeignete CFC-Körper erhalten.

Nachfolgend wird die Erfindung anhand dreier Ausführungsbeispiele näher erläutert.

1. Herstellung des Matrixvorprodukts.

1.1 Aufbereitung des Steinkohlenteerpechs.

Ein Steinkohlenteerpech mit einem Erweichungspunkt (nach DIN 52025) von 250°C, einer Dichte von 1,36 g/cm³, einer Koksausbeute (nach DIN 51905) von 83 % und einem Aschegehalt (nach DIN 51903) von 0,15 % wurde in einem ersten Mahlgang auf einer Hammermühle vorzerkleinert und anschließend auf einer Feinprallmühle mit einem Dreiecksiebeinsatz von 0,5 mm Weite auf eine Korngröße von 100 % < 200 μm fein zerkleinert. Zur weiteren Verwendung kam ein abgesiebtes Pechpulver mit einer Korngröße von 100 % < 100 μm.

1.2 Kunstharzkomponente

Als Kunstharzkomponente wurde ein Phenolharz vom Resoltyp mit einem Wassergehalt von 15 Gew.-%, einer Viskosität bei 20 °C von 1200 m Pa·s und einer Koksausbeute (nach DIN 51905) von 50 % zum Einsatz.

1.3 Herstellung des Matrixvorprodukts

Zur Herstellung des Matrixvorprodukts wurden in das auf 70 bis 80°C erwärmte Harz auf 100 Gew.-Teile Harz 60 Gew.-Teile Pechpulver eingebracht und die Mischung insgesamt eine Stunde bei dieser Temperatur gehalten und gerührt. Danach wurde das Matrixvorprodukt auf Raumtemperatur abgekühlt.

Beispiel 1

Eine Vielzahl graphitierter Kohlenstoff-Rovinggewebe aus 3 k Rovingmaterial von 0,7 dtex/Filament, textile Bindung Köper 2/2, Flächengewicht 250 g/m² wurde mit seiner 2,5-fachen Gewichtsmenge an Matrixvorprodukt bei Raumtemperatur infiltriert. Sodann wurden jeweils 12 Lagen der infiltrierten Gewebe nacheinander in 0° Richtung, d.h. die Kettrichtungen aller übereinandergelegter Gewebelagen waren gleich, übereinander abgelegt. Dabei wurden die Gewebelagen beim Auflegen jeweils mit einem Walzenroller angedrückt, um Lufteinschlüsse zu vermeiden. Danach wurden die Stapel aus imprägnierten Gewebelagen zum Härten in eine hydraulische Gesenkpresse mit heizbarer Preßform gelegt und dort während 2,5 Stunden unter einer spezifischen Flächenbelastung von 1,1 MPa bei 150 °C ausgehärtet. Dabei betrug die Aufheizrate von Raumtemperatur bis 80 °C 2 K/Min. von 80°C bis zum Beginn der Härtung bei 130 °C 0,8 K/Min. und von 130 °C bis 150 °C 0,33 K/Min. Nach dem Entformen betrug die Dichte des gehärteten Verbundkörpers 1,47 g/cm³. Anschließend wurden die Körper in einem Ofen in Inertgasatmosphäre bei Normaldruck durch Aufheizen mit einer Aufheizrate von 9,5 K/Stunde bis zu einer Endtemperatur von 1000 °C verkokt. Im verkokten Zustand hatten die Verbundkörper eine Dichte von 1,28 g/cm³. Ein Teil der carbonisierten CFC-Körper wurde nach der Vakuum-Druck-Methode mit einem Imprägnierpech, Erweichungspunkt nach DIN 52025, 60 °C, imprägniert und erneut carbonisiert. Die Dichte der so gefertigten Körper betrug 1,43 g/cm³. Einige der nachverdichteten und nochmals carbonisierten Körper wurden einer Graphitierungsbehandlung bei einer Temperatur von 2000 °C unterworfen. Danach betrug die Dichte der Körper infolge von Schrumpfungsprozessen 1,46 g/cm³.

Parallel zur Herstellung der erfindungsgemäßen CFC-Körper wurden entsprechende Körper nach der herkömmlichen Fertigungstechnik, also ohne Zusatz von Spezialpech zum Matrixvorprodukt, die entgegen dem erfindungsgemäßen Verfahren zwei Imprägnier- und zwei Carbonisierungsstufen zusätzlich umfaßt, gefertigt.

In Tabelle 1 sind die physikalischen Meßwerte der nach den verschiedenen Verfahren hergestellten CFC-Verbundkörper gegenübergestellt.

## Tabelle 1

| Körper gemäß | Anzahl Imprägnierungen | Temperaturbehandlung bis | Biegefestigkeit MPa | Elastizitätsmodul GPa | Interlaminare Scherfestigkeit MPa |
|---|---|---|---|---|---|
| Erfindung | 0 | 1000 °C | 97 | 42 | 6 |
| Erfindung | 1 | 1000 °C | 182 | 60 | 12,5 |
| Erfindung | 1 | 2000 °C | 159 | 54 | 8 |
| Vergleich | 0 | 1000 °C | 35 | 24 | 1,5 |
| Vergleich | 1 | 1000 °C | 92 | 40 | 5 |
| Vergleich | 1 | 2000 °C | 83 | 40 | 4,5 |
| Vergleich | 3 | 1000 °C | 179 | 63 | 11 |

EP 0 466 962 B1

Beispiel 2

In diesem Beispiel wurde statt eines Rovinggewebes ein Stapelfasergewebe mit der textilen Bindung Köper 2/2 und einem Flächengewicht von 240 g/m²verwendet. Die anderen Herstellungsparameter waren die gleichen wie im Beispiel 1. Die Dichten der erfindungsgemäßen Verbundkörper in den einzelnen Fertigungsstufen betrugen:

nicht carbonisiert:          $1,47 \text{ g/cm}^3$

carbonisiert:          $1,21 \text{ g/cm}^3$

1x mit Pech imprägniert

und carbonisiert:          $1,38 \text{ g/cm}^3$

1x imprägniert, carbonisiert und graphitiert:          $1,41 \text{ g/cm}^3$.

Parallel zur Herstellung dieser Verbundkörper wurden zu Vergleichszwecken wieder entsprechende Körper nach der bisher gebräuchlichen Technik hergestellt.

In Tabelle 2 sind die physikalischen Eigenschaften der nach dem erfindungsgemäßen Verfahren hergestellten CFC-Körper denen herkömmlicher Vergleichskörper gegenübergestellt.

## Tabelle 2

| Körper gemäß | Anzahl Imprägnie- rungen | Temperatur- behandlung bis | Biegefestig- keit MPa | Elastizitäts- modul GPa | Interlaminare Scherfestigkeit MPa |
|---|---|---|---|---|---|
| Erfindung | 0 | 1000 °C | 55 | 18 | 6 |
| Erfindung | 1 | 1000 °C | 104 | 26 | 11,5 |
| Erfindung | 1 | 2000 °C | 79 | 21 | 8 |
| Vergleich | 0 | 1000 °C | 25 | 10 | 2 |
| Vergleich | 1 | 1000 °C | 75 | 21 | 8 |
| Vergleich | 1 | 2000 °C | 68 | 21 | 7,5 |
| Vergleich | 3 | 1000 °C | 101 | 26 | 10,5 |

EP 0 466 962 B1

### Beispiel 3

Herstellung des Matrixvorprodukts: Als Ausgangsmaterialien wurden das gleiche Resol und das gleiche Steinkohlenteerpech in der gleichen Korngröße wie für die Ausführungsbeispiele 1 und 2 verwendet. In 100 Gewichtsteile des auf 90 °C bis 100 °C erwärmten Resols wurden 100 Gewichtsteile Steinkohlenteerpech unter Rühren eingebracht. Nach dem Abkühlen wurden der Mischung noch 50 Gewichtsteile Äthylalkohol unter Rühren zugesetzt, um das Einmischen des Fasermaterials in das Matrixvorprodukt zu erleichtern.

Herstellung der Versuchskörper: 100 Gewichtsteile graphitierter Kohlenstoffasern mit einer Faserlänge zwischen 20 und 60 mm wurden in einem oben offenen Gefäß mit 250 Gewichtsteilen des äthylalkoholhaltigen Matrixvorprodukts während einer Dauer von 30 Min. infiltriert. Um eine schonende Benetzung und eine gleichmäßige Verteilung der Fasern im Matrixvorprodukt zu gewährleisten, wurden bei diesem Versuch die Mischungskomponenten von Hand vermischt. Nach dem Einmischen der Fasern wurde der Alkohol unter Anlegen eines leichten Vakuums aus der Mischung entfernt. Anschließend wurde die Kurzfasermischung in die heizbare Preßform einer hydraulischen Gesenkpresse gebracht und dort mit einem Preßdruck von 1 MPa unter Anwendung des bereits in Beispiel 1 beschriebenen Temperaturprogramms ausgehärtet. Der Faservolumenanteil des ausgehärteten, nicht carbonisierten Verbundwerkstoffes lag bei ca. 30 %. Nach dem Aushärten wurden die Körper in der gleichen Weise, wie dies für die Körper des Beispiels 1 beschrieben ist, carbonisiert. Zum Nachverdichten wurde daraufhin ein Teil der Körper mit Pech imprägniert und nochmals carbonisiert. Diese Nachverdichtungsbehandlung wurde für einen weiteren Teil der Versuchskörper noch einmal wiederholt, so daß auch zweimal nachverdichtete Körper zur Verfügung standen. Wie bei den Beispielen 2 und 3 wurde ein weiterer Teil der Körper noch zusätzlich bei 2000 °C graphitiert.

Für Vergleichszwecke wurden wieder Körper nach konventioneller Verfahrensweise, d.h. mit einem Matrixvorprodukt ohne Spezialpechzusatz in den Qualitäten nicht nachverdichtet, sowie einmal, zweimal und dreimal mit Pech nachimprägniert und carbonisiert, hergestellt.

Tabelle 3 gibt die physikalischen Meßwerte der nach den verschiedenen Verfahren hergestellten Verbundkörper dieses Beispiels im Vergleich wieder.

Tabelle 3

| Körper gemäß | Anzahl Imprägnie-rungen | Temperatur-behandlung bis | Biegefestig-keit MPa | Elastizitäts-modul GPa | Rohdichte g/cm$^3$ |
|---|---|---|---|---|---|
| Erfindung | 0 | 1000 °C | 45 | 20 | 1,08 |
| Erfindung | 1 | 1000 °C | 70 | 27 | 1,21 |
| Erfindung | 2 | 1000 °C | 90 | 35 | 1,39 |
|  | 2 | 2000 °C | 85 | 35 | 1,41 |
| Vergleich | 0 | 1000 °C | 15 | 10 | 0,85 |
| Vergleich | 1 | 1000 °C | 35 | 17 | 0,95 |
| Vergleich | 2 | 1000 °C | 48 | 22 | 1,08 |
| Vergleich | 3 | 1000 °C | 60 | 27 | 1,12 |
|  | 3 | 2000 °C | 55 | 28 | 1,14 |

EP 0 466 962 B1

Aus dem Vergleich der in den Tabellen 1, 2 und 3 wiedergegebenen Meßwerte ist klar erkennbar, daß erfindungsgemäße CFC-Verbundkörper mindestens das gleiche Meßwertniveau erreichen wie die nach dem sehr viel aufwendigeren, bis jetzt gebräuchlichen Verfahren hergestellten Vergleichskörper.

**Patentansprüche**

1. Verfahren zur Herstellung eines Verbundkörpers, der aus
   i. zwei- oder dreidimensionalen textilen Gebilden aus Kohlenstoffasern und
   ii. aus einer Kohlenstoffmatrix aus einer carbonisierten Kunstharz-Pechmischung besteht, dadurch gekennzeichnet, daß
      a) durch Vermischen eines Phenolharzes vom Resoltyp mit einem Koksrückstand von 40 bis 65 %
         - mit einem Pech aus der Gruppe Steinkohlenteer-, Petrol- oder Mesophasenpech, Schmelzpunkt größer als 200 °C, Koksrückstand größer als 75 %, Kornfeinheit 100 % kleiner 200 $\mu$m
         - in einem Verhältnis von 100 Gewichtsteilen Harz und 60 bis 200 Gewichtsteilen Pech
         - bei einer Temperatur von 60 bis 90 °C
         - eine Matrixharzmischung hergestellt wird,
      b) ein aus Kohlenstoffasern bestehendes textiles Gebilde mit der Matrixharzmischung bei einer Temperatur die zwischen Raumtemperatur und 110 °C liegt, infiltriert wird,
      c) das infiltrierte textile Gebilde als solches oder als Stapel aus einer Anzahl derartiger übereinandergeschichteter Gebilde in einer heizbaren Preßeinrichtung bei einer Temperatur von minimal 130 °C und maximal 180 °C und einem Druck von mindestens 0,2 und höchstens 5,0 MPa ausgehärtet wird,
      d) der ausgehärtete Körper unter Ausschluß von Sauerstoff mit einem Temperaturgradienten von mindestens 9 K pro Stunde bis zu einer Temperatur von mindestens 600 °C carbonisiert wird.

2. Verfahren nach Patentanspruch 1,
   dadurch gekennzeichnet, daß
   das aus Kohlenstoffasern bestehende Gebilde aus Kohlenstoffkurzfasern mit einem Faservolumengehalt von mindestens 15 und höchstens 70 % und einer Faserlänge von mindestens drei Millimetern besteht.

3. Verfahren nach Patentanspruch 1,
   dadurch gekennzeichnet, daß
   als aus Kohlenstoffasern bestehendes textiles Gebilde ein Kohlenstoffilz verwendet wird.

4. Verfahren nach Patentanspruch 1,
   dadurch gekennzeichnet, daß
   als aus Kohlenstoffasern bestehendes textiles Gebilde ein Kohlenstoffgewebe verwendet wird.

5. Verfahren nach Patentanspruch 1,
   dadurch gekennzeichnet, daß
   als aus Kohlenstoffasern bestehendes textiles Gebilde ein dreidimensional vernetztes Gestrick aus Kohlenstoffasern verwendet wird.

6. Verfahren nach den Patentansprüchen 1 bis 5,
   dadurch gekennzeichnet, daß
   der carbonisierte Verbundkörper durch Imprägnieren mit einem flüssigen Kohlenstoffträger und nachfolgendes Karbonisieren nachverdichtet wird.

7. Verfahren nach Patentanspruch 6,
   dadurch gekennzeichnet, daß
   als flüssiger Kohlenstoffträger ein Imprägnierpech mit einem Erweichungspunkt zwischen 50 °C und 250 °C verwendet wird.

8. Verfahren nach Patentanspruch 6,
   dadurch gekennzeichnet, daß
   als flüssiger Kohlenstoffträger eine geschmolzene Mischung eines Imprägnierpeches mit einem Phenolharz, dessen Koksrückstand 40 bis 65 % ist, im Gewichtsverhältnis 1:2 verwendet wird.

EP 0 466 962 B1

**9.** Verfahren nach den Patentansprüchen 1 bis 8,
dadurch gekennzeichnet, daß
der Verbundkörper bei einer Temperatur von mindestens 1800 °C graphitiert wird.

## Claims

**1.** Method for producing a composite body which consists of
   i. two- or three-dimensional textile carbon fibre structures and
   ii. a carbon matrix made of a carbonized synthetic resin pitch mixture, characterised in that
      a) a matrix resin mixture is produced by mixing a resol-type phenolic resin having a 40 to 65% coke residue
         - with a pitch from the group coal tar pitch, petroleum pitch or mesophase pitch, melting point above 200°C, coke residue greater than 75%, grain fineness 100% less than 200 μm,
         - in a ratio of 100 parts by weight resin and 60 to 200 parts by weight pitch,
         - at a temperature of 60 to 90°C,
      b) a textile structure consisting of carbon fibres is infiltrated with the matrix resin mixture at a temperature lying between ambient temperature and 110°C,
      c) the infiltrated textile structure is hardened as such or as a stack of a number of such structures arranged in layers one on top of the other, in a heatable pressing device at a temperature of a minimum of 130°C and a maximum of 180°C and at a pressure of at least 0.2 and at most 5.0 MPa,
      d) the hardened body is carbonized with exclusion of oxygen with a temperature gradient of at least 9 K per hour up to a temperature of at least 600°C.

**2.** Method according to claim 1, characterised in that the structure consisting of carbon fibres consists of short carbon fibres with a fibre volume content of at least 15 and at most 70% and a fibre length of at least three millimetres.

**3.** Method according to claim 1, characterised in that a carbon felt is used as a textile structure consisting of carbon fibres.

**4.** Method according to claim 1, characterised in that a woven carbon fabric is used as a textile structure Consisting of carbon fibres.

**5.** Method according to claim 1, characterised in that a three-dimensionally cross-linked knitted fabric of carbon fibres is used as a textile structure consisting of carbon fibres.

**6.** Method according to claims 1 to 5, characterised in that the carbonized composite body is subsequently redensified by impregnation with a fluid carbon carrier and subsequent carbonization.

**7.** Method according to claim 6, characterised in that an impregnating pitch with a softening point of between 50°C and 250 °C is used as a fluid carbon carrier.

**8.** Method according to claim 6, characterised in that a molten mixture of an impregnating pitch with a phenolic resin, the coke residue of which is 40 to 65%, is used as a liquid carbon carrier in a weight ratio of 1:2.

**9.** Method according to claims 1 to 8, characterised in that the composite body is graphitized at a temperature of at least 1800°C.

## Revendications

**1.** Procédé de fabrication d'un corps composite qui se compose :
   i) de structures textiles bi ou tridimensionnelles en fibres de carbone et,
   ii) d'une matrice de carbone en un mélange de brai et de résine synthétique carbonisé,
caractérisé en ce que :
      a) en mélangeant une résine phénolique du type résol avec un résidu de coke de 40 à 65 %,
         - avec un brai du groupe brai de goudron de houille, brai de pétrole ou brai de mésophases, de

13

point de ramollissement supérieur à 200°C, résidu de coke supérieur à 75 %, finesse de grain 100 % inférieure à 200 µm,
- en un rapport de 100 parties en poids de résine et de 60 à 200 parties en poids de brai,
- à une température de 60 à 90°C,
on fabrique un mélange de résine de matrice,

b) on infiltre une structure textile composée de fibres de carbone avec le mélange de résine de matrice à une température allant de la température ambiante à 110°C,

c) on durcit la structure textile infiltrée comme telle ou en pile constituée d'un nombre de structures de ce type empilées l'une sur l'autre dans un dispositif de pressage chauffable à une température minimale de 130°C et maximale de 180°C et à une pression au moins de 0,2 et au plus de 5,0 MPa,

d) on carbonise le corps durci en excluant l'oxygène avec un gradient de température d'au moins 9 K par heure jusqu'à une température d'au moins 600°C.

2. Procédé selon la revendication 1, caractérisé en ce que la structure composée de fibres de carbone est constituée de fibres de carbone courtes avec une teneur en volume de fibres au moins de 15 et au plus de 70 % et une longueur de fibre au moins de trois millimètres.

3. Procédé selon la revendication 1, caractérisé en ce que comme structure textile composée de fibres de carbone, on utilise un feutre de carbone.

4. Procédé selon la revendication 1, caractérisé en ce que comme structure textile composée de fibres de carbone, on utilise un tissu de carbone.

5. Procédé selon la revendication 1, caractérisé en ce que comme structure textile composée de fibres de carbone, on utilise un tricotage réticulé tridimensionnel en fibres de carbone.

6. Procédé selon les revendications 1 à 5, caractérisé en ce que le corps composite carbonisé est condensé ultérieurement par imprégnation avec un support de carbone liquide et carbonisation à la suite.

7. Procédé selon la revendication 6, caractérisé en ce que comme support liquide de carbone, on utilise un brai d'imprégnation avec un point de ramollissement compris entre 50°C et 250°C.

8. Procédé selon la revendication 6, caractérisé en ce que comme support liquide de carbone, on utilise dans le rapport de poids 1:2 un mélange fondu d'un brai d'imprégnation avec une résine phénolique dont le résidu en coke est de 40 à 65 %.

9. Procédé selon les revendications 1 à 8, caractérisé en ce que le corps composite est graphité à une température d'au moins 1800°C.